# EUROPÄISCHE PATENTSCHRIFT

(11) **EP 3 471 245 B1**
(45) Veröffentlichungstag und Bekanntmachung des Hinweises auf die Patenterteilung: **18.11.2020**
(21) Anmeldenummer: 17196215.2
(22) Anmeldetag: 12.10.2017
(51) Int. Cl.: H02K 41/03, H02K 29/03, H02K 1/17, H02K 1/34

(54) **SEKUNDÄRTEIL FÜR EINEN EISENLOSEN LINEARMOTOR UND EISENLOSER LINEARMOTOR**
SECONDARY PART FOR AN IRONLESS LINEAR MOTOR AND IRONLESS LINEAR MOTOR
PARTIE SECONDAIRE POUR UN MOTEUR LINÉAIRE SANS FER ET MOTEUR LINÉAIRE SANS FER

(43) Veröffentlichungstag der Anmeldung: 17.04.2019
(73) Patentinhaber: ETEL S.A., 2112 Môtiers (CH)
(72) Erfinder: Monaghan, Sean David, Co Fermanagh, Fermanagh BT745NU (GB); Baverel, Vivien, 25500 Morteau (FR)
(74) Vertreter: Maikowski & Ninnemann Patentanwälte Partnerschaft mbB

(56) Entgegenhaltungen:
- EP-A1- 0 949 749
- WO-A1-2016/050407
- US-B1- 7 808 133
- US-B1- 7 989 993

## Beschreibung

Diese Schrift betrifft Ausführungsformen eines Sekundärteils für einen Linearmotor, insbesondere Ausführungsformen eines Sekundärteils für einen eisenlosen Linearmotor, sowie Ausführungsformen eines eisenlosen Linearmotors.

Beispiele für einen eisenlosen Linearmotor (damit sind insbesondere kernlose Linearmotoren gemeint) sind aus der US 2006/0175907 A1, der US 4,749,921 und der EP 2 884 638 A1 bekannt. Außerdem beschreibt die europäische Patentanmeldung mit der Anmeldenummer EP17178938.1 Aspekte eines eisenlosen Linearmotors, insbesondere des Primärteils für einen eisenlosen Linearmotor.

Linearmotoren werden z.B. eingesetzt, wenn es um eine hochgenaue und gegebenenfalls auch schnelle Positionierung von Objekten, wie zum Beispiel eines Maschinenteiles einer Werkzeugmaschine, geht. Dabei kann das Primärteil des Linearmotors über eine geeignete Schnittstelle unmittelbar mit dem zu bewegenden Maschinenteil oder sonstigem Objekt verbunden sein. Das heißt, im Gegensatz zu einem konventionellen Rotationsmotor entfällt hier üblicherweise die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen mindestens einer am Primärteil vorgesehenen Spule kein Kern, wie ein Eisenkern, zugeordnet ist. Hierdurch lassen sich störende Rastkräfte vermeiden. Es sind jedoch entsprechend größere Spulenströme erforderlich, um auch ohne Kern hinreichend große Kräfte am Primärteil des Linearmotors erzeugen zu können. Die Spulen werden zum Beispiel in Form vorgeformter Einzelspulen bereitgestellt. Das heißt, der zur Bildung der Spulen verwendete, z.B. mit einer Isolationsschicht versehene Draht wird nicht unmittelbar auf einen Kern gewickelt, sondern beispielsweise ohne Kern gewickelt und sodann zur Ausbildung des Elektromotors verbaut. Hierbei kann ein Aufsetzen der kernlosen Einzelspule auf einen in den Elektromotor integrierten Eisenkern erfolgen; es kann aber auch vorgesehen sein, die Einzelspule als so genannte "Luftspule" in dem Elektromotor ohne zugehörigen Kern zu betreiben.

Insbesondere, wenn ein Linearmotor für eine hochgenaue und gegebenenfalls auch schnelle Positionierung von Objekten, wie zum Beispiel eines Maschinenteiles einer Werkzeugmaschine, eingesetzt werden soll, ist ein geringes Gewicht vorteilhaft. Nicht nur das Primärteil, das, wie gesagt, z.B. ohne Eisenkern bereitgestellt wird, stellt dabei eine Herausforderung dar.

Auch das Sekundärteil des Linearmotors soll z.B. hinsichtlich seines Gewichts optimiert sein. Dies gilt beispielsweise insbesondere dann, wenn das Sekundärteil samt Primärteil, also der gesamte Motor, an das Primärteil eines anderen Motors gekoppelt ist, beispielsweise zur Realisierung eines X-Y-Antriebs.

Gleichzeitig muss das Sekundärteil aber Anforderungen betreffend die Stabilität erfüllen.

Problematisch ist in diesem Zusammenhang, dass Jochplatten, die mit Permanentmagneten bestückt sind und den magnetischen Pfad für das Primärteil ausbilden, aufgrund des Magnetfelds der Permanentmagneten ständigen Kräften ausgesetzt sind, was zu Verbiegungen und somit zu Verformungen des magnetischen Pfads führen kann.

Eine zu starke Verbiegung oder Verformung des Sekundärteils könnte dazu führen, dass das Primärteil das Sekundärteil berührt und dabei die sehr empfindlichen Magnete beschädigt. Diese Berührung und/oder Beschädigung gilt es unbedingt zu vermeiden.

Eine Möglichkeit wäre, den Luftspalt zu vergrößern (größere Toleranz bei Verformung), womit indessen Leistungseinbußen einhergehen würden. Daher sollte eher das Sekundärteil verstärkt werden.

In diesem Zusammenhang ist es z.B. aus den Dokumenten US 7,989,993 B1 sowie US 2007/0052303 A1 bekannt, an den Außenseiten der Jochplatten Verstärkungsstrukturen vorzusehen, die der Entstehung besagter Verbiegungen entgegenwirken sollen.

Die WO 2016/050407 A1 beschreibt ein Aufzugsystem mit einem in einem Aufzugschacht verfahrbarem Fahrkorb, wobei der Fahrkorb ein Chassiselement umfasst, wobei in dem Aufzugschacht wenigstens eine Schiene angeordnet ist, wobei das Aufzugsystem wenigstens einen Linearmotor mit jeweils einem Primärteil und jeweils einem Sekundärteil umfasst, wobei das Primärteil des wenigstens einen Linearmotors an der wenigstens einen Schiene angeordnet ist, wobei das Sekundärteil des wenigstens einen Linearmotors an dem Chassiselement angeordnet ist und wobei das Sekundärteil des wenigstens einen Linearmotors das Primärteil des wenigstens einen Linearmotors zumindest teilweise umschließt.

Die EP 0949749 A1 beschreibt einen nutenlosen Linearmotor mit einer verteilten Wicklung, aufweisend: mehrere Permanentmagnete, die abwechselnde magnetische Polflächen bereitstellen, die entlang einem geradlinigen Luftspalt vorbestimmter Höhe angeordnet sind; eine verteilte geradlinige Wicklung mit vorbestimmten Außenabmessungen, die sich wenigstens teilweise in dem Luftspalt befindet, und mehrere geschichtete Leitermuster und eine Isolation zwischen benachbarten Leitermustern enthält; wobei die geradlinige Wicklung und die sich abwechselnden magnetischen Polflächen für eine relative Linearbewegung montiert sind; wobei die geschichteten Leitermuster Leiterabschnitte mit vorbestimmter Länge senkrecht zu der Bewegungsrichtung enthalten; magnetisches Material, das einen Flussrückschlusspfad für die Permanentmagnete und quer zu dem geradlinigen Luftspalt bereitstellt; und eine Einrichtung zum Erregen der Wicklung gemäß der Position der Wicklung in Bezug auf die Permanentmagnete. Die Länge des senkrechten Leitabschnittes beträgt zwischen 50% und 85% der geradlinigen Luftspalthöhe ist.

Die US 2010 264755 A1 beschreibt einen Motor, der eine Magnetanordnung mit zwei entlang einer ersten Achse angeordneten Magnetreihen aufweist, die durch einen Spalt zur Erzeugung von Magnetflusslinien zwischen den Magnetreihen voneinander getrennt sind. Der Motor weist ferner eine Spulenhalterung auf, die sich in dem Spalt zwischen den beiden Magnetreihen befindet. Die Spulenhalterung enthält einen ersten Satz von Spulen, die entlang der ersten Achse angeordnet sind und die Bewegung der Spulenhalterung relativ zu der Magnetanordnung entlang der ersten Achse antreiben.

Es ist Aufgabe der vorliegenden Erfindung, eine technische Lehre vorzuschlagen, gemäß der die Anordnung und Ausbildung einer solchen Verstärkungsstruktur in vorteilhafter Weise auf übrige Komponenten des Sekundärteils ausgerichtet werden kann.

Hiervon ausgehend wird vorliegend gemäß dem unabhängigen Anspruch 1 ein Sekundärteil für einen Linearmotor vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt definiert ein Sekundärteil einen magnetischen Pfad für ein Primärteil eines Linearmotors. Das Sekundärteil enthält: ein Abstandsglied; zwei Schenkel ausbildende Jochplatten, die für eine Befestigung an dem Abstandsglied ausgebildet sind, so dass sie sich, einander gegenüberliegend, senkrecht zum magnetischen Pfad erstrecken. Die zwei Jochplatten sind ausgebildet, an ihrer jeweiligen Innenseite eine Vielzahl von Permanentmagneten aufzunehmen. An ihrer jeweiligen Außenseite weisen die zwei Jochplatten jeweils eine Verstärkungsstruktur auf, die durch eine in Richtung des magnetischen Pfades periodische Veränderung der Plattendicke gebildet ist. Das Abstandsglied weist eine Anzahl Montagestellen auf, die für eine Befestigung des Sekundärteils in einer Anwendung ausgebildet sind, wobei lokale Minima der Verstärkungsstruktur entlang der Richtung des magnetischen Pfades mit den Montagestellen überlappen. Jede Periode der Verstärkungsstruktur weist ein Verstärkungselement auf, dessen Breite entlang der Höhe des jeweiligen Schenkels abnimmt

Ein zweiter Aspekt betrifft einen eisenlosen Linearmotor, der ein Sekundärteil gemäß dem ersten Aspekt aufweist.

Nachstehend wird auf beide vorstehend genannten Aspekte Bezug genommen werden.

Der Linearmotor ist beispielsweise ein eisenloser (also ein kernloser) Linearmotor, bei dem die Spulen des Primärteils ohne Kern ausgebildet sind.

Das Sekundärteil liegt beispielweise als eine Art Basisprofilanordnung mitz.B. U-förmigen Querschnitt vor, die im Wesentlichen durch das Abstandsglied, die beiden Jochplatten und die Permanentmagneten ausgebildet wird. Natürlich können weitere Bestandteile, wie Befestigungselemente und dergleichen, ebenfalls Teil der Basisprofilanordnung sein. Ebenso können mehrere Abstandsgliedglieder vorgesehen sein, die beispielsweise in Längsrichtung des Sekundärteils nebeneinander angeordnet sind, sowie entsprechend mehrerer Jochplatten.

Bei einer Ausführungsform ist das Abstandsglied zur Führung eines Primärteils entlang des magnetischen Pfades ausgebildet.

Beispielsweise bildet eine nutartige Aussparung des Abstandsglieds, in die das Primärteil teilweise eingelassen wird, die Basis des magnetischen Pfades. Die Jochplatten bilden die beiden Schenkel des z.B. U-förmigen Querschnitts aus. Sie sind an dem Abstandsglied befestigt und erstrecken sich hiervon ausgehend in die Höhe, nämlich senkrecht zu Längserstreckung der nutartigen Aussparung, also senkrecht zur Richtung des magnetischen Pfades.

Die Jochplatten sind beispielsweise aus einem Eisen gefertigt. Sie sind ausgebildet, an ihrer jeweiligen Innenseite die Permanentmagneten aufzunehmen. Die Permanentmagneten sind in Längsrichtung des Sekundärteils polalternierend angeordnet ("Nord-Süd-Nord-Süd-Nord-Süd..."), wobei die Reihenfolge an der anderen Sekundärteilseite, also an der gegenüberliegenden Jochplatte, komplementär ist ("Süd-Nord-Süd-Nord-Süd-Nord..."), womit sichergestellt ist, dass sich Nord- und Südpol stets gegenüberliegen. Die Permanentmagneten sind beispielsweise als Magnetplatten ausgebildet und in einem kleinen Abstand zueinander von z.B. 1 mm bis 3 mm angeordnet. Eine Breite einer Magnetplatte entlang der Längserstreckung des Sekundärteils beträgt beispielweise etwa ein oder mehrere Zentimeter.

Das Abstandsglied ist beispielsweise ebenfalls aus einem Eisen gefertigt.

Als Alternative zu Eisen kommen sowohl für das Abstandsglied als auch für die Jochplatten andere Materialien in Betracht, die eine hohe magnetische Permeabilität aufweisen.

Wenn die Jochplatten mit den Permanentmagneten bestückt sind und an dem Abstandsglied befestigt sind, fluchten die Permanentmagneten beispielweise mit Schenkeln des Abstandsgliedes, welche z.B. die nutartige Aussparung definieren.

Zur Befestigung des Sekundärteils in einer Anwendung, beispielsweise zur Befestigung an einem Maschinenteil, umfasst das Abstandsglied eine Anzahl Montagestellen, die z.B. in Gestalt von Montageaussparungen vorliegen. Beispielsweise liegen die Montagestellen jeweils in Gestalt einer Bohrung vor, die mit einem Gewinde versehen ist. Zum Beispiel wird das Sekundärteil dann mit Schrauben, die in die Montageaussparungen greifen, an dem Maschinenteil befestigt. Bei einer Ausführungsform ist vorgesehen, dass die Jochplatten von der Befestigung des Sekundärteils in der Anwendung nicht betroffen sind. So berühren beispielsweise Schrauben, die für die Befestigung verwendet werden, nur das Abstandsglied, nicht aber die Jochplatten.

An den Außenseiten der Jochplatten ist jeweils eine Verstärkungsstruktur angebracht. Die Verstärkungsstruktur kann monolithisch in der jeweiligen Jochplatte integriert sein, in dem die Jochplatte beispielsweise einem Fräsevorgang oder ähnlichem ausgesetzt wird, oder die Verstärkungsstruktur wird als separates Element an der Jochplatte installiert, beispielsweise angeklebt oder in anderer Weise befestigt. Bei einer Ausführungsform wird also eine dickere Platte durch einen Fräsvorgang oder ähnlichem strukturiert und hinsichtlich der Dicke lokal verjüngt, um bei der anderen Ausführungsform wird eine zunächst dünnere Platte mit einer separat hergestellten Verstärkungsstruktur versehen.

Unabhängig davon, welche der beiden oben beschriebenen Ausführungsformen vorliegt, wird die Verstärkungsstruktur, die durch eine in Richtung des magnetischen Pfades periodische Veränderung der Plattendicke ausgebildet ist, derart vorgesehen, dass lokale Minima der Verstärkungsstruktur entlang der Richtung des magnetischen Pfades mit den Montagestellen des Abstandsglied überlappen. Der magnetische Pfad erstreckt sich zum Beispiel parallel zur Längserstreckung des Sekundärteils.

Die Montagestellen sind also in einem regelmäßigen Abstand entlang der Längsrichtung des Sekundärteils im Abstandsglied vorgesehen. In Längsrichtung bzw. in Richtung des magnetischen Pfades überlappen sie mit den lokalen Minima der Verstärkungsstruktur.

Bei einer Ausführungsform ist jedem lokalen Minimum der Verstärkungsstruktur einer der beiden Jochplatten genau eine Montagestelle zugeordnet. Die Verstärkungsstrukturen der beiden Jochplatten sind beispielsweise ohne Versatz zueinander angeordnet; so gesehen können, wenn die Montagestelle als durchgängige Aussparung ausgebildet ist, jeder Montagestelle auch zwei Minima zugeordnet sein.

Aufgrund der Verstärkungsstruktur ist die Dicke der jeweiligen Jochplatte in Längsrichtung nicht konstant. In Längsrichtung wechselt die Dicke beispielsweise regelmäßig von einem niedrigen Wert zu einem hohen Wert, wobei der Wertunterschied im Bereich von 2 bis 4 mm liegen kann. Eine Basisdicke der Jochplatte, zum Beispiel im unteren Bereich der Jochplatte, beträgt z.B. 6 mm. Pro Periode der Verstärkungsstruktur ändert sich der Wert beispielsweise einmal vom niedrigen zum hohen Wert und einmal vom hohen Wert zurück zum niedrigen Wert.

Bei einer Ausführungsform ist die Verstärkungsstruktur so ausgestaltet, dass die Strecke, entlang der die Dicke der Jochplatte pro Periode den höheren Wert aufweist, mit zunehmender Höhe der Jochplatte abnimmt. Umgekehrt ausgedrückt ist die Verstärkungsstruktur bei dieser Ausführungsform so ausgestaltet, dass auf ihrem tiefsten Niveau die Strecke, entlang der die Dicke der Jochplatte pro Periode den niedrigen Wert aufweist, minimal ist. Je nach Ausgestaltung der Verstärkungsstruktur (dazu sogleich) kann diese Strecke auch nahezu punktförmig ausfallen.

Dort, wo die Strecke, entlang der die Dicke der Jochplatte pro Periode der Verstärkungsstruktur den niedrigen Wert aufweist, minimal ist, befindet sich nach der Diktion dieser Schrift ein lokales Minimum der Verstärkungsstruktur. An diesen Stellen entfaltet die durch die Verstärkungsstruktur herbeigeführte Jochplattenverstärkung also ihre geringste Wirkung (mit Blick auf die Vermeidung von den eingangs geschilderten Verbiegungen).

Dort, wo die Strecke, entlang der die Dicke der Jochplatte pro Periode der Verstärkungsstruktur den höheren Wert aufweist, minimal ist, befindet sich nach der Diktion dieser Schrift ein lokales Maximum der Verstärkungsstruktur. An diesen Stellen entfaltet die durch die Verstärkungsstruktur herbeigeführte Jochplattenverstärkung also ihre größte Wirkung (mit Blick auf die Vermeidung von den eingangs geschilderten Verbiegungen).

In Längsrichtung schließen die beiden Jochplatten bei einer Ausführungsform des Sekundärteils an beiden Enden mit einem jeweiligen lokalen Maximum der Verstärkungsstruktur ab.

Zum Beispiel sind für jede Periode der Verstärkungsstruktur in Längsrichtung des Sekundärteils zwei magnetische Perioden vorgesehen. Jede magnetische Periode ist gebildet durch zwei Permanentmagneten an jeder der zwei Jochplatten, die, wie gesagt, polalternierend nebeneinander und polalternierend gegenüberliegend angeordnet sind. Eine Periode der Verstärkungsstruktur entspricht hinsichtlich ihrer Breite also etwa der Breite von vier nebeneinander angeordneten Permanentmagneten. Dabei kann das lokale Maximum derart angeordnet sein, dass sich neben diesem in und entgegen der Längsrichtung jeweils zwei Permanentmagneten befinden.

Jede Periode der Verstärkungsstruktur weist ein Verstärkungselement auf, dessen Breite entlang der Höhe des jeweiligen Schenkels (ausgebildet durch die jeweilige Jochplatte) abnimmt, beispielweise um wenigstens 50% und/oder in linearer Art. Die Verstärkungselemente der Verstärkungsstruktur können nahtlos ineinander übergehen. So entstehen oben besagte lokale Minima und lokale Maxima, also Minima und Maxima jener Streckenabschnitte, entlang derer die Dicke entweder den höheren oder den niedrigeren Wert aufweist.

Darüber hinaus ist bei einer Ausführungsform des Sekundärteils vorgesehen, dass jedes Verstärkungselement zumindest in einem oberen Teilbereich eine entlang der Höhe des jeweiligen Schenkels abnehmende Dicke aufweist. Die Verstärkungselemente können also jeweils mit einer Fase versehen sein. Auf diese Weise wird das Gewicht des Sekundärteils weiter reduziert. Zum Beispiel erstreckt sich die Fase entlang wenigstens 10% der Gesamthöhe des jeweiligen Verstärkungselements.

Die Verstärkungselemente der Verstärkungsstruktur weisen bei einer Ausführungsform jeweils die Form eines Trapez oder eines Dreiecks auf, was mit Blick auf die in den Figuren dargestellten Ausführungsbeispiele noch näher erläutert werden wird. Die lokalen Minima, also jene minimalen Streckenabschnitte, entlang derer die Dicke der Jochplatte den niedrigeren Wert aufweist, werden beispielsweise durch den Übergang zwischen zwei benachbarten Verstärkungselementen ausgebildet, wobei dieser Übergang "nahtlos" sein kann.

Bei einer weiteren Ausführungsform weisen die Jochplatten Befestigungsaufnahmen auf, die für die Zwecke der Befestigung am Abstandsglied ausgebildet sind. Dazu werden zum Beispiel Befestigungsmittel durch die Befestigungsaufnahmen der Jochplatten geführt und an dem Abstandsglied befestigt. In Richtung des magnetischen Pfades überlappen diese Befestigungsaufnahmen mit den lokalen Maxima der Verstärkungsstruktur, also mit jenen Abschnitten (die ebenfalls nahezu punktförmig ausfallen können), wo die Strecke, entlang der die Dicke der Jochplatte den höheren Wert aufweist, minimal ist. Auf diese Weise wird eine weitere Stabilitätsverbesserung erzielt.

Es liegt außerdem im Rahmen der Erfindung, dass die Jochplatten ausgebildet sind, nicht von an die Montagestellen angreifenden Befestigungselementen kontaktiert zu werden. Hierzu weisen die Jochplatten beispielsweise Einschnitte auf, die die Montagestellen des Abstandsglieds freilegen.

Die Stellen, an denen die Jochplatten an dem Abstandsglied befestigt werden, überlappen also mit den lokalen Maxima der Verstärkungsstruktur, und die Stellen, an denen das Sekundärteil über das Abstandsglied in einer Anwendung, beispielsweise an einem Maschinenteil, befestigt wird, überlappen mit den lokalen Minima der Verstärkungsstruktur.

Außerdem kann das Abstandsglied zur weiteren Gewichtsreduzierung eine Vielzahl freibleibender Aussparungen aufweisen.

Der eisenlose Linearmotor des zweiten Aspektes ist beispielsweise hinsichtlich seiner elektromechanischen Funktion ausgebildet, wie es in der DE 10 2015 222 265 A1 und der EP 2 884 638 A1 beschrieben ist.

Weitere Einzelheiten und Vorteile der Erfindung werden bei der nachfolgenden Beschreibung einiger Ausführungsbeispiele anhand der Figuren deutlich werden.

Es zeigen:
- Fig. 1A-B: jeweils exemplarisch und schematisch einen Ausschnitt einer perspektivischen Ansicht eines Sekundärteils gemäß einer oder mehreren Ausführungsformen;
- Fig. 2: exemplarisch und schematisch einen Ausschnitt einer perspektivischen Aufrissansicht eines Sekundärteils gemäß einer oder mehreren Ausführungsformen;
- Fig. 3A-C: exemplarisch und schematisch einen jeweiligen Ausschnitt einer Aufsicht, einer perspektivischen Ansicht und einer Querschnittsansicht einer Jochplatte gemäß einer oder mehreren Ausführungsformen;
- Fig. 4A-B: exemplarisch und schematisch einen jeweiligen Ausschnitt einer Aufsicht und einer Querschnittsansicht eines Sekundärteils gemäß einer oder mehreren Ausführungsformen;
- Fig. 5: exemplarisch und schematisch einen Ausschnitt einer perspektivischen Ansicht eines Abstandsglieds gemäß einer oder mehreren Ausführungsformen; und
- Fig. 6: exemplarisch und schematisch einen Ausschnitt einer perspektivischen Ansicht eines Linearmotors gemäß einer oder mehreren Ausführungsformen.

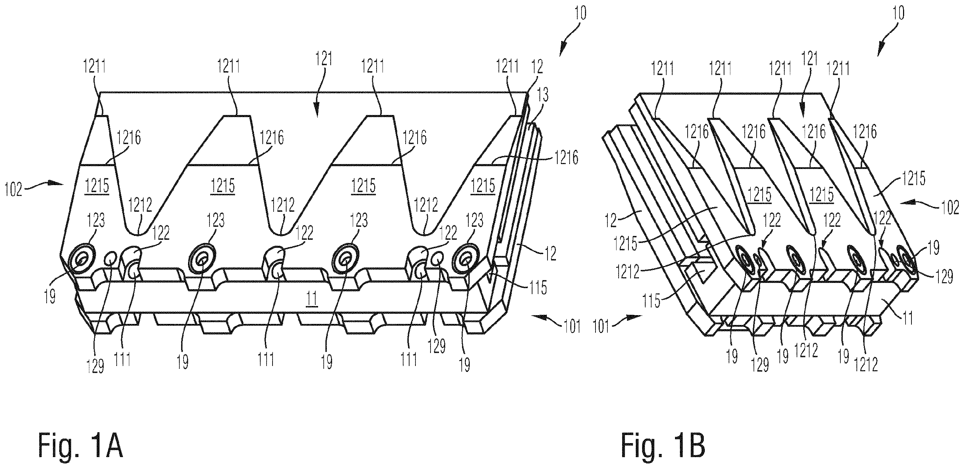

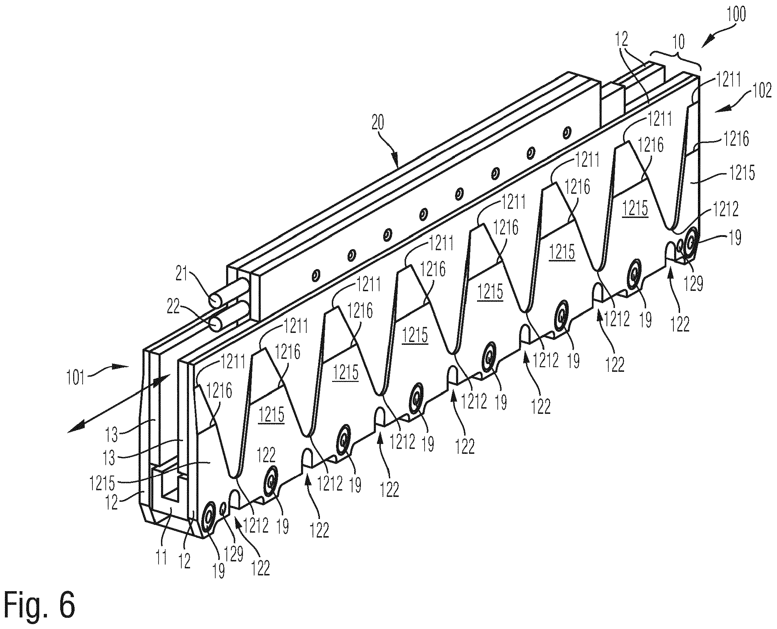

Die Fig. 1A und 1B zeigen jeweils schematisch und exemplarisch eine perspektivische Ansicht eines Sekundärteils 10. Das Sekundärteil 10 definiert einen magnetischen Pfad für ein Primärteil eines Linearmotors. Ein beispielhaftes Primärteil ist schematisch in der Fig. 6 gezeigt und dort mit der Bezugsziffer 20 gekennzeichnet. Der magnetische Pfad erstreckt sich entlang der durch den in der Fig. 6 gezeigten Doppelpfeil angedeuteten Richtung und somit in Längsrichtung zu dem Sekundärteil 10.

Der Linearmotor 100 ist zum Beispiel als eisenloser Linearmotor ausgebildet, bei dem die Spulen des Primärteils 20 keinen Kern aufweisen. Das Primärteil 20 kann in einer Art und Weise ausgebildet sein, wie es in der europäischen Patentanmeldung mit der Nummer EP17178938.1 beschrieben ist. Die Spulen des Primärteils 20 werden über eine Stromzuführung 21 mit einem Strom beaufschlagt. Über eine Kabelleitung 22 werden ein oder mehrere Messsignale ausgelesen werden, wie eine Temperatur, z.B. eine Temperatur an einer der Spulen des Primärteils 20.

Das Sekundärteil 10 des Linearmotors 100 ist beispielsweise gemäß einer der Ausführungsbeispiele nach den Fig. 1A-5 ausgebildet.

Der Sekundärteil 10 umfasst hiernach ein Abstandsglied 11. Bei einer Ausführungsform ist das Abstandsglied 11 zur Führung des Primärteils 20 entlang des magnetischen Pfades ausgebildet.

Zum Beispiel ist bei dem Abstandsglied 11 eine nutartige Aussparung 115 vorgesehen, in die das Primärteil 20 teilweise eingelassen wird, wie in der Fig. 6 veranschaulicht.

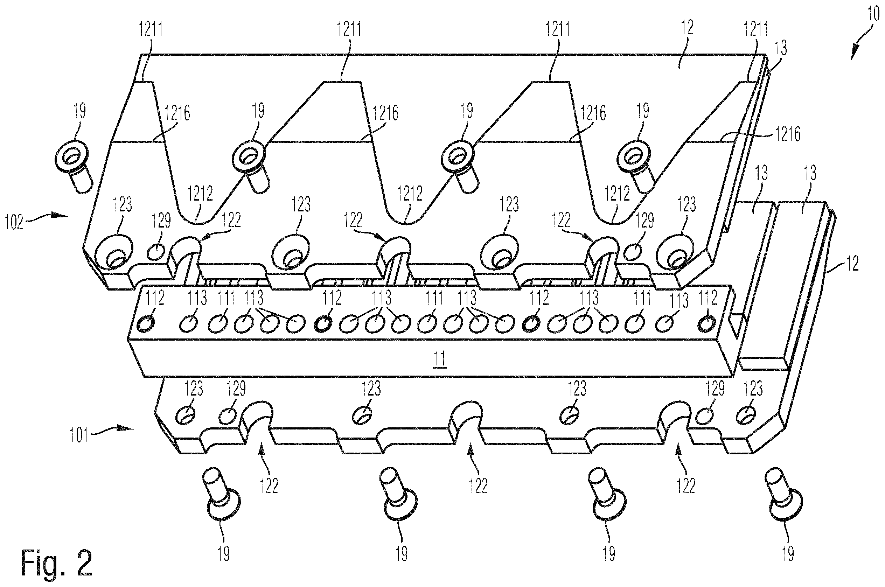

Das Abstandsglied 11 weist außerdem eine Anzahl Montagestellen 111 auf, die für eine Befestigung des Sekundärteils in einer Anwendung ausgebildet sind. Über die Montagestellen 111, die auch in den Fig. 2, 4A-6 dargestellt sind, wird das Sekundärteil 10 zum Beispiel an einem Maschinenteil befestigt. Die Montagestellen 111 sind zum Beispiel als Gewindebohrungen ausgebildet, in die Befestigungsschrauben (hier nicht dargestellt) eingreifen.

An jeder Seite 101 und 102 des Sekundärteils 10 ist wenigstens eine Jochplatte 12 vorgesehen. Die Jochplatten 12 bilden Schenkel aus, indem sie sich einander gegenüberliegend senkrecht zum magnetischen Pfad erstrecken. Auf diese Weise entsteht ein Basisprofil mit einem U-förmigen Querschnitt.

Zum Beispiel weisen die Jochplatten 12 Befestigungsaufnahmen 123 auf, die für die Zwecke der Befestigung an dem Abstandglied 11 zur Aufnahme von Befestigungsmitteln 19 ausgebildet sind. Befestigungsmittel 19 sind zum Beispiel als Schrauben ausgebildet, die durch die Befestigungsaufnahmen 123 geführt werden und in Gewinde 112 des Abstandsglieds 11 greifen.

Dabei sind die Jochplatten 12 weiter ausgebildet, nicht von an die Montagestellen 111 des Abstandsglieds 11 angreifenden Befestigungselementen kontaktiert zu werden. Dazu weisen die Jochplatten 12 zum Beispiel Einschnitte 122 auf, die die Montagestellen 111 des Abstandsglieds 11 freilegen. Die Montagestellen 111 sowie die in diese eingreifenden Befestigungsmittel tragen nicht zwingend zur Stabilität des Sekundärteils 10 bei. Das Sekundärteil 10 wird also derart in einer Anwendung installiert, dass hierzu notwendigen Befestigungsmittel an die Montagestellen 111 des Abstandsglieds ankoppeln, ohne die Jochplatten 12 zu kontaktieren. Die Einschnitte 122 tragen zur Gewichtsreduzierung bei. An den Innenseiten weisen die beiden Jochplatten 12 eine Vielzahl von Permanentmagneten 13 auf. Die Permanentmagneten 13 sind in Längsrichtung des Sekundärteils 10 polalternierend angeordnet ("Nord-Süd-Nord-Süd-Nord-Süd..."), wobei die Reihenfolge an der anderen Sekundärteilseite, also an der gegenüberliegenden Jochplatte, komplementär ist ("Süd-Nord-Süd-Nord-Süd-Nord..."), womit sichergestellt ist, dass sich Nord- und Südpol stets gegenüberliegen. Die Permanentmagneten 13 sind beispielsweise als Magnetplatten ausgebildet und in einem kleinen Abstand zueinander von z.B. 1 mm bis 3 mm angeordnet.

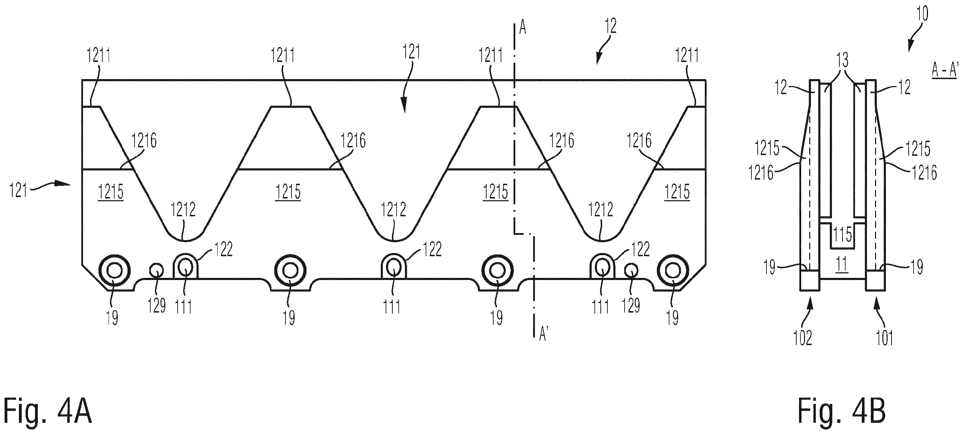

Wie in der Querschnittsansicht der Fig. 4B schematisch dargestellt ist, fluchten die Permanentmagneten 13 mit Schenkeln des Abstandsgliedes 11, die die nutartige Aussparung 115 zur Führung des Primärteils 20 ausbilden.

An den Außenseiten weisen die beiden Jochplatten 12 jeweils eine Verstärkungsstruktur 121 auf. Die Verstärkungsstrukturen 121 dienen dazu, einer Verbiegung/Verformung aufgrund der Magnetkräfte entgegenzuwirken.

An jeder Seite sind die Verstärkungsstrukturen 121 durch eine in Richtung des magnetischen Pfades (also in Längsrichtung des Sekundärteils 10) periodische Veränderung der Plattendicke gebildet. Die Verstärkungsstrukturen 121 an beiden Seiten 101,102 des Sekundärteils 10 können identisch zueinander ausgebildet sein und auch aufeinander ausgerichtet sein, also ohne Versatz in Längsrichtung zueinander. Nachfolgend wird stets von "der Verstärkungsstruktur 121" gesprochen, wobei damit bei der Verstärkungsstrukturen 121 an beiden Sekundärteilseiten 101, 102 gemeint sind.

Die Verstärkungsstruktur 121 weist eine Vielzahl von lokalen Maxima 1211 und lokalen Minimal 1212 auf. Dort, wo die Strecke, entlang der die Dicke der Jochplatte 12 pro Periode der Verstärkungsstruktur 121 den niedrigen Wert aufweist, minimal ist, befindet sich nach der Diktion dieser Schrift ein lokales Minimum 1212 der Verstärkungsstruktur 121. An diesen Stellen 1212 entfaltet die durch die Verstärkungsstruktur 121 herbeigeführte Jochplattenverstärkung also ihre geringste Wirkung (mit Blick auf die Vermeidung von den eingangs geschilderten Verbiegungen).

Dort, wo die Strecke, entlang der die Dicke der Jochplatte 12 pro Periode der Verstärkungsstruktur 121 den höheren Wert aufweist, minimal ist, befindet sich nach der Diktion dieser Schrift ein lokales Maximum 1211 der Verstärkungsstruktur 121. An diesen Stellen entfaltet die durch die Verstärkungsstruktur 121 herbeigeführte Jochplattenverstärkung also ihre größte Wirkung.

Bei den in den Fig. 1A-5 dargestellten Ausführungsbeispielen sind vier lokale Maxima 1211 vorgesehen sowie der dazwischen befindliche drei lokale Minima 1212.

Die Verstärkungsstruktur 121 ist bei den dargestellten Ausführungsbeispielen durch eine Vielzahl von aneinander anknüpfenden Verstärkungselementen 1215 gebildet. Für jede Periode der Verstärkungsstruktur 121 ist je ein Verstärkungselement 1215 vorgesehen. Die Breite jedes Verstärkungselements 1215 nimmt entlang der Höhe des jeweiligen Schenkels ab, beispielsweise um wenigstens 50%. Bei einem dreiecksförmigen Verstärkungselement würde die Breitenabnahme folglich etwa 100% betragen. Die Verstärkungselemente sind z.B. zu dimensioniert, dass die Breitenabnahme entlang der Höhe in linearer Weise erfolgt. Durch die Breitenabnahme entstehen die lokalen Minima1212 (nämlich dort, wo zwei Verstärkungselemente 1215 aneinander angrenzen) und die lokalen Maxima 1211, die zum Beispiel in der Mitte einer jeweiligen Periode positioniert sind.

Für jede Periode der Verstärkungsstruktur 121 sind in Längsrichtung des Sekundärteils 10 zum Beispiel genau zwei magnetische Perioden vorgesehen. Bei diesem Ausführungsbeispiel entspricht die Breite eines jeden Verstärkungselements 1215 der Breite von vier, in Längsrichtung nebeneinander angeordneten Permanentmagneten 13.

Entsprechend den weiter oben beispielhaft genannten Maßangaben hat eine magnetische Periode beispielsweise eine Länge von einigen Zentimetern, bspw. 32 mm. Zum Beispiel sind die Permanentmagnete 13 ca. 14 mm breit und in einem 16 mm Raster angeordnet, also in einem Abstand ("Spalt") von 2 mm zwischen den einzelnen Permanentmagneten 13. Die magnetische Periode ist bei diesem Beispiel folglich 32 mm lang.

Jedes Verstärkungselement 1215 ist bei den gezeigten Ausführungsbeispielen trapezförmig ausgebildet. Bei einem anderen Ausführungsbeispiel sind Verstärkungselemente 1215 dreiecksförmig ausgebildet. Auch andere Formen kommen in Betracht, beispielsweise eine Sinusform oder dergleichen. In herstellungstechnischer Hinsicht können indessen geradlinig verlaufenden Verstärkungselemente 1215, wie in den Zeichnungen dargestellt, vorteilhaft sein.

Die Verstärkungsstruktur 121 wird zum Beispiel in die Jochplatte 12 eingefräst. Bei einer anderen Ausführungsform wird die Verstärkungsstruktur 121 separat hergestellt und dann an der Jochplatte 12 befestigt.

Vorgeschlagen wird hier weiter eine bestimmte Ausrichtung zwischen der Verstärkungsstruktur 121 einerseits und Montagestellen 111 sowie den Befestigungsaufnahmen 123 andererseits.

Zum Beispiel ist für jede Periode der Verstärkungsstruktur 121 genau eine Montagestelle 111 und genau eine Befestigungsaufnahme vorgesehen.

Die Verstärkungsstruktur 121 ist derart an der Jochplatte 12 angeordnet, dass die lokalen Minimal 1212 entlang der Richtung des magnetischen Pfades mit den Montagestellen 111 überlappen. Jeder Montagestelle 111 ist also genau ein lokales Minimum 1212 der Verstärkungsstruktur 121 einer der Jochplatten 12 zugeordnet. Die Montagestellen 111 können auch als durchgängige Aussparungen ausgebildet sein, beispielsweise als durchgängige Gewindebohrungen, so dass jeder Montagestelle 111 zwei gegenüberliegende lokale Minima 1212 beider Verstärkungsstrukturen 121 der Jochplatten 12 zugeordnet sind.

Die Verstärkungsstruktur 121 ist bei den gezeigten Ausführungsbeispielen weiter derart angeordnet, dass die Jochplatte 12 an ihren beiden Enden in Längsrichtung jeweils mit einem lokalen Maximum 1211 abschließt. Somit befinden sich die beiden, zu den Enden am nächsten liegenden Montagestellen 111 um jeweils eine halbe Periode der Verstärkungsstruktur 121 von den Enden entfernt, genau, wie die beiden nächsten Minima 1211.

Die Anordnung von Montagestellen 111 in einem Raster entsprechend einer ganzen Periode der Verstärkungsstruktur 121 hat weiter den Vorteil, dass sie die Montage des Sekundärteils 10 in einer Anwendung entsprechend eben diesem Rastermaß erlaubt. Insbesondere im Falle einer sequenziellen Anordnung mehrerer Sekundärteile zur Ausbildung längerer magnetischer Pfade für das Primärteil 20 kann dies vorteilhaft sein. Die sequentiell angeordneten Sekundärteile 10 knüpfen beispielsweise entlang einer Geraden "nahtlos" aneinander an, sodass in der Anwendung alle Kopplungsstellen (also Gegenstellen) für die Montagestellen 111 der sequentiell angeordneten Sekundärteile 10 im besagten Rastermaß (und insbesondere unabhängig von den Positionen der Übergänge zwischen den sequentiell angeordneten Sekundärteilen 10) vorgesehen werden können.

Außerdem ist die Verstärkungsstruktur 121 bei den gezeigten Ausführungsbeispielen derart angeordnet, dass die lokalen Maxima 1211 in Längsrichtung mit den Befestigungsaufnahmen 123 überlappen. Über die Befestigungsaufnahmen 123 erfolgt, wie gesagt, die Befestigung der Jochplatten 12 an dem Abstandsglied 11. Der Überlapp zwischen den lokalen Maxima 1211 einerseits und den Befestigungsaufnahmen 123 andererseits hat den Vorteil, dass die Jochplatten 12 an jenen Stellen mit dem Abstandsglied 11 befestigt sind, wo eine maximale Steifigkeit der Jochplatten 12 vorliegt. Bei einer Ausführungsformen ist an den beiden Enden des Sekundärteils 10 der jeweilige Überlapp zwischen den lokalen Maxima 1211 einerseits und den Befestigungsaufnahmen 123 andererseits nicht oder nur teilweise ausgebildet; die beiden (bzw. vier) Befestigungsaufnahmen 123 sind dort, beispielsweise aufgrund raumgeometrischer Anforderungen, geringfügig in Richtung Mitte des Sekundärteils 10 versetzt.

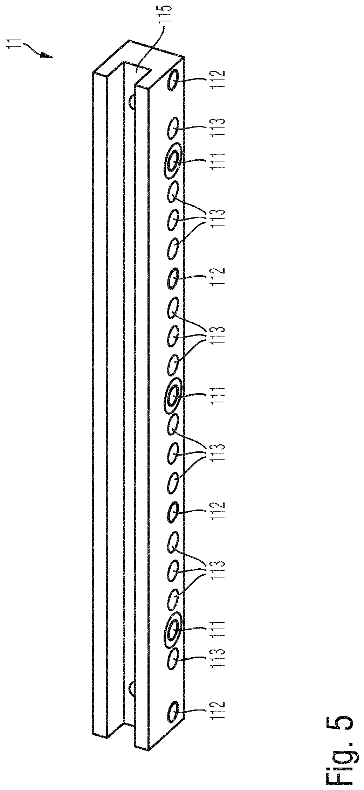

Weitere optionale Merkmale des Sekundärteils 10 werden mit Blick auf die übrigen Zeichnungen erläutert. Bei einer Ausführungsform weist das Abstandsglied 11 zur weiteren Gewichtsreduzierung eine Vielzahl von durchgängigen, beispielsweise zylinderförmigen Aussparungen 113 auf, wie sie schematisch in der Fig. 2 und Fig. 5 gezeigt sind. In diese durchgängigen Aussparungen 113 greifen beispielsweise keine Befestigungselemente oder dergleichen ein; vielmehr sind diese freibleibend. Die Anzahl der durchgängigen Aussparungen 113 sowie der jeweilige Durchmesser werden so gewählt, dass die mit den durchgängigen Aussparungen 113 einhergehende Gewichtsreduzierung die Stabilität des Sekundärteils 10 nicht gefährdet.

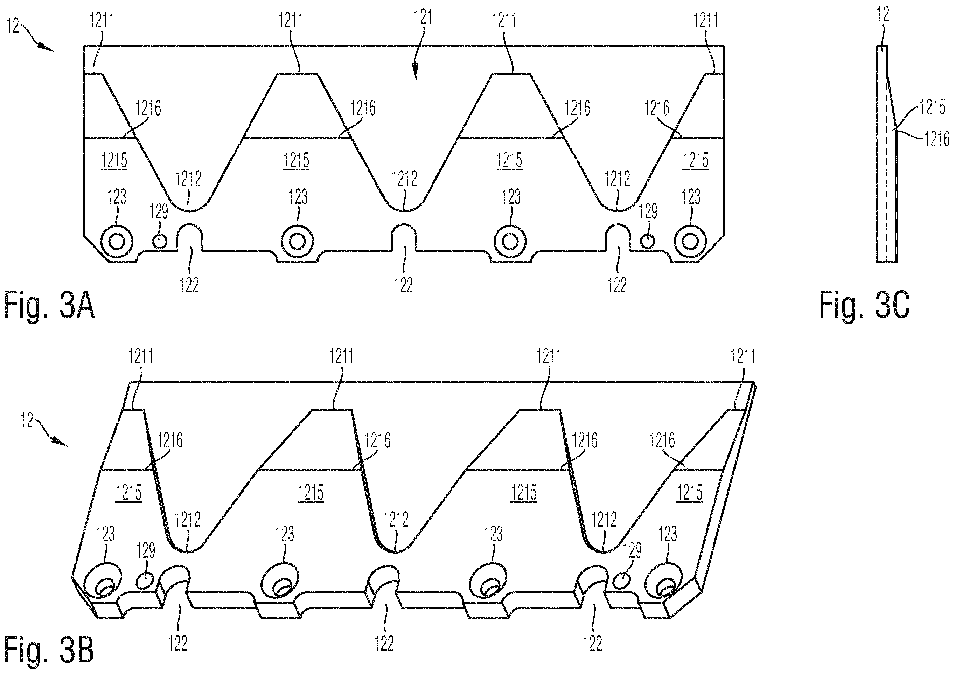

Wie zum Beispiel auch in den Fig. 3B, 3C und 4B dargestellt, ist bei manchen Ausführungsbeispielen vorgesehen, dass jedes Verstärkungselement 1115 zumindest in einem oberen Teilbereich eine entlang der Höhe des jeweiligen Schenkels abnehmende Dicke aufweist. Auf diese Weise wird eine weitere Gewichtsreduzierung erzielt. Die jeweilige Abnahme der Dicke wird z.B. durch eine Fase ausgebildet, die im oberen Teilbereich des betreffenden Verstärkungselements 1215 ansetzt, beispielsweise an der Linie 1216, die sich im oberen Drittel des Verstärkungselements 1215 befindet. Die Fase setzt sich bis zum Abschluss des Verstärkungselements 1215 fort, beispielsweise derart, dass bei Abschluss die Dicke stetig in die Basisplattenstärke der Jochplatte 12 übergeht, wie z.B. in den Fig. 3C und 4B gezeigt.

Die Jochplatten 12 sind bei einer Ausführungsform außerdem mit weiteren, beispielsweise zylinderförmigen Aussparungen 129 versehen, die während der Montage dazu verwendet werden können, um die beiden Seiten 101, 102 des Sekundärteils 10 auf das Abstandsglied 11 auszurichten. Beispielsweise werden dazu (in den Zeichnungen nicht dargestellte) Ausrichtungsstifte durch die Aussparungen 129 geführt und dort gehalten, bis eine Befestigung der Jochplatten über die Komponenten 19 und 123 erfolgt ist. Hiernach werden die Befestigungsstifte wahlweise entfernt oder verbleiben in den Aussparungen 129.

## Patentansprüche

1. Sekundärteil (10), das einen magnetischen Pfad für ein Primärteil (20) eines Linearmotors (100) definiert und enthält:
- ein Abstandsglied (11),
- zwei Schenkel ausbildende Jochplatten (12), die für eine Befestigung an dem Abstandsglied (11) ausgebildet sind, so dass sie sich, einander gegenüberliegend, senkrecht zum magnetischen Pfad erstrecken, und wobei die zwei Jochplatten (12):
- ausgebildet sind, an ihrer jeweiligen Innenseite eine Vielzahl von Permanentmagneten (13) aufzunehmen;
- an ihrer jeweiligen Außenseite eine Verstärkungsstruktur (121) aufweisen, die durch eine in Richtung des magnetischen Pfades periodische Veränderung der Plattendicke gebildet ist;
**dadurch gekennzeichnet, dass**
- das Abstandsglied (11) eine Anzahl Montagestellen (111) aufweist, die für eine Befestigung des Sekundärteils in einer Anwendung ausgebildet sind, wobei lokale Minima (1212) der Verstärkungsstruktur (121) entlang der Richtung des magnetischen Pfades mit den Montagestellen (111) überlappen; und
- jede Periode der Verstärkungsstruktur (121) ein Verstärkungselement (1215) aufweist, dessen Breite entlang der Höhe des jeweiligen Schenkels abnimmt.

2. Sekundärteil (10) nach Anspruch 1, wobei die Jochplatten (12) jeweils in Längsrichtung an beiden Enden mit einem jeweiligen lokalen Maximum (1211) der Verstärkungsstruktur abschließen.

3. Sekundärteil (10) nach Anspruch 1 oder 2, wobei für jede Periode der Verstärkungsstruktur (121) in Längsrichtung des Sekundärteils (10) zwei magnetische Perioden vorgesehen sind.

4. Sekundärteil (10) nach Anspruch 3, wobei eine magnetische Periode gebildet ist durch zwei Permanentmagneten (13) an jeder der zwei Jochplatten (12), die polalternierend nebeneinander und polalternierend gegenüberliegend angeordnet sind.

5. Sekundärteil (10) nach einem der vorstehenden Ansprüche, wobei die Breite um wenigstens 50% abnimmt und/oder wobei die Breite linear abnimmt.

6. Sekundärteil (10) nach einem der vorstehenden Ansprüche, wobei jedes Verstärkungselement (1215) zumindestin einem oberen Teilbereich eine entlang der Höhe des jeweiligen Schenkels abnehmende Dicke aufweist.

7. Sekundärteil (10) nach Anspruch 6, wobei die jeweilige Abnahme der Dicke durch eine Fase (1216) ausgebildet ist, die sich entlang wenigstens 10% der Gesamthöhe des jeweiligen Verstärkungselements (1215) erstreckt.

8. Sekundärteil (10) nach einem der vorstehenden Ansprüche 5 bis 7, wobei jedes Verstärkungselement (1215) die Form eines Trapezes oder eines Dreiecks aufweist.

9. Sekundärteil (10) nach einem der vorstehenden Ansprüche 5 bis 8, wobei die lokalen Minima der Verstärkungsstruktur (121) gebildet sind durch den Übergang zwischen zwei benachbarten Verstärkungselementen (1215).

10. Sekundärteil (10) nach einem der vorstehenden Ansprüche, wobei die Jochplatten (12) Befestigungsaufnahmen (123) aufweisen, die für die Zwecke der Befestigung an dem Abstandglied (11) zur Aufnahme von Befestigungsmitteln (19) ausgebildet sind, wobei lokale Maxima (1211) der Verstärkungsstruktur (121) in Richtung des magnetischen Pfades mit den Befestigungsaufnahmen (123) überlappen.

11. Sekundärteil (10) nach einem der vorstehenden Ansprüche, wobei die Jochplatten (12) ausgebildet sind, nicht von an die Montagestellen (111) angreifenden Befestigungselementen kontaktiert zu werden.

12. Sekundärteil (10) nach Anspruch 12, wobei die Jochplatten (12) Einschnitte (122) aufweisen, die die Montagestellen (111) des Abstandsglieds (11) freilegen.

13. Sekundärteil (10) nach einem der vorstehenden Ansprüche, wobei das Abstandsglied (11) zur Gewichtsreduzierung eine Vielzahl freibleibender Aussparungen (113) aufweist.

14. Eisenloser Linearmotor (100), wobei der eisenlose Linearmotor (100) ein Sekundärteil (10) nach einem der vorstehenden Ansprüche aufweist.

## Claims

1. Secondary part (10) which defines a magnetic path for a primary part (20) of a linear motor (100) and contains:
- a spacer member (11);
- yoke plates (12) which configure two legs and which are configured for fastening to the spacer member (11) such that said yoke plates (12) lying opposite one another extend perpendicularly to the magnetic path, and wherein the two yoke plates (12) :
- on the respective internal side thereof are configured for receiving a multiplicity of permanent magnets (13);
- on the respective external side thereof have a reinforcement structure (121) which in the direction of the magnetic path is formed by a periodic variation in the thickness of the plate;
**characterized in that**
- the spacer member (11) has a number of assembly points (11) which are configured for fastening the secondary part in an application, wherein local minimums (1212) of the reinforcement structure (121) in the direction of the magnetic path overlap with the assembly points (111); and
- each period of the reinforcement structure (121) has a reinforcement element (1215), the width of the latter decreasing along the height of the respective leg.

2. Secondary part (10) according to Claim 1, wherein the yoke plates (12) each, at both ends, in the longitudinal direction, terminate by way of a respective local maximum (1211) of the reinforcement structure.

3. Secondary part (10) according to Claim 1 or 2, wherein two magnetic periods are provided in the longitudinal direction of the secondary part (10) for each period of the reinforcement structure (121) .

4. Secondary part (10) according to Claim 3, wherein a magnetic period is formed by two permanent magnets (13) on each of the two yoke plates (12), said two permanent magnets (13) being disposed with alternating poles beside one another and with alternating poles opposite one another.

5. Secondary part (10) according to one of the preceding claims, wherein the width decreases by at least 50%, and/or wherein the width decreases in a linear manner.

6. Secondary part (10) according to one of the preceding claims, wherein each reinforcement element (1215), at least in an upper sub-region, has a thickness which decreases along the height of the respective leg.

7. Secondary part (10) according to Claim 6, wherein the respective decrease in the thickness is configured by a chamfer (1216) which extends along at least 10% of the overall height of the respective reinforcement element (1215).

8. Secondary part (10) according to one of preceding Claims 5 to 7, wherein each reinforcement element (1215) has the shape of a trapezoid or a triangle.

9. Secondary part (10) according to one of preceding Claims 5 to 8, wherein the local minimums of the reinforcement structure (121) are formed by the transition between two neighbouring reinforcement elements (1215).

10. Secondary part (10) according to one of the preceding claims, wherein the yoke plates (12) have fastening receptacles (123) which, for the purpose of fastening to the spacer element (11), are configured for receiving fastening means (19), wherein local maximums (1211) of the reinforcement structure (121) in the direction of the magnetic path overlap with the fastening receptacles (123).

11. Secondary part (11) according to one of the preceding claims, wherein the yoke plates (12) are configured so as not to be contacted by fastening elements that engage on the assembly points (111).

12. Secondary part (10) according to Claim 12, wherein the yoke plates (12) have notches (122) which expose the assembly points (111) of the spacer member (11).

13. Secondary part (10) according to one of the preceding claims, wherein the spacer member (11) for reducing weight has a multiplicity of vacant recesses (113).

14. Ironless linear motor (100), wherein the ironless linear motor (100) has a secondary part (10) according to one of the preceding claims.

## Revendications

1. Partie secondaire (10), qui définit un trajet magnétique pour une partie primaire (20) d'un moteur linéaire (100) et comporte :
- un organe d'espacement (11),
- deux plaques de culasse (12) qui forment des branches et sont réalisées pour une fixation à l'organe d'espacement (11), de telle sorte qu'elles s'étendent en regard l'une de l'autre et perpendiculairement au trajet magnétique, et dans laquelle les deux plaques de culasse (12) :
- sont réalisées pour loger une pluralité d'aimants permanents (13) sur leur côté intérieur respectif ;
- comprennent, sur leur côté extérieur respectif, une structure de renforcement (121) qui est formée par une variation périodique de l'épaisseur de plaque dans la direction du trajet magnétique ;
**caractérisée en ce que**
- l'organe d'espacement (11) comprend un nombre de points de montage (111) qui sont réalisés pour une fixation de la partie secondaire dans une application, des minimums locaux (1212) de la structure de renforcement (121) chevauchant les points de montage (111) le long de la direction du trajet magnétique ; et
- chaque période de la structure de renforcement (121) comprend un élément de renforcement (1215) dont la largeur diminue le long de la hauteur de la branche respective.

2. Partie secondaire (10) selon la revendication 1, dans laquelle les plaques de culasse (12) se terminent respectivement, dans la direction longitudinale, aux deux extrémités, par un maximum local (1211) respectif de la structure de renforcement.

3. Partie secondaire (10) selon la revendication 1 ou 2, dans laquelle, pour chaque période de la structure de renforcement (121), deux périodes magnétiques sont prévues dans la direction longitudinale de la partie secondaire (10) .

4. Partie secondaire (10) selon la revendication 3, dans laquelle une période magnétique est formée par deux aimants permanents (13) au niveau de chacune des deux plaques de culasse (12) qui sont juxtaposées de manière alternée en polarité et disposées en regard de manière alternée en polarité.

5. Partie secondaire (10) selon l'une des revendications précédentes, dans laquelle la largeur diminue d'au moins 50 % et/ou la largeur diminue linéairement.

6. Partie secondaire (10) selon l'une des revendications précédentes, dans laquelle chaque élément de renforcement (1215) présente, au moins dans une région partielle supérieure, une épaisseur diminuant le long de la hauteur de la branche respective.

7. Partie secondaire (10) selon la revendication 6, dans laquelle la diminution respective de l'épaisseur est réalisée au moyen d'un biseau (1216) qui s'étend le long d'au moins 10 % de la hauteur totale de l'élément de renforcement (1215) respectif.

8. Partie secondaire (10) selon l'une des revendications précédentes 5 à 7, dans laquelle chaque élément de renforcement (1215) présente la forme d'un trapèze ou d'un triangle.

9. Partie secondaire (10) selon l'une des revendications précédentes 5 à 8, dans laquelle les minimums locaux de la structure de renforcement (121) sont formés par la transition entre deux éléments de renforcement adjacents (1215).

10. Partie secondaire (10) selon l'une des revendications précédentes, dans laquelle les plaques de culasse (12) comprennent des logements de fixation (123) qui sont, à des fins de fixation à l'organe d'espacement (11), réalisés pour le logement de moyens de fixation (19), dans laquelle des maximums locaux (1211) de la structure de renforcement (121) chevauchent les logements de fixation (123) dans la direction du trajet magnétique.

11. Partie secondaire (10) selon l'une des revendications précédentes, dans laquelle les plaques de culasse (12) sont réalisées pour ne pas être mises en contact avec des éléments de fixation qui viennent en prise avec les points de montage (111).

12. Partie secondaire (10) selon la revendication 12, dans laquelle les plaques de culasse (12) comprennent des entailles (122) qui rendent visibles les points de montage (111) de l'organe d'espacement (11).

13. Partie secondaire (10) selon l'une des revendications précédentes, dans laquelle l'organe d'espacement (11) comprend une pluralité d'évidements (113) restant libres pour la réduction de poids.

14. Moteur linéaire (100) sans fer, le moteur linéaire (100) sans fer comprenant une partie secondaire (10) selon l'une des revendications précédentes.
